# EUROPEAN PATENT SPECIFICATION

(11) **EP 0 965 024 B1**
(45) Date of publication and mention of the grant of the patent: **24.07.2002**
(21) Application number: 98909495.8
(22) Date of filing: 04.03.1998
(51) Int. Cl.: F27D 1/16, B22D 41/02

(54) **METHOD FOR THE PRODUCTION OF REFRACTORY LININGS**
VERFAHREN ZUR HERSTELLUNG EINER FEUERFESTEN AUSKLEIDUNGEN
PROCEDE DE PRODUCTION DE GARNISSAGES REFRACTAIRES

(30) Priority: 05.03.1997 DE 19708847
(43) Date of publication of application: 22.12.1999
(73) Proprietor: Alcoa Chemie GmbH, 67065 Ludwigshafen (DE)
(72) Inventor: THELEN, Otto, D-56581 Melsbach (DE); MIDDELDORF, Thomas, Ferdinand, D-44799 Bochum (DE)
(74) Representative: Ebner von Eschenbach, Jennifer
(86) International application number: EP9801212
(87) International publication number: WO9839608

(56) References cited:
- EP-A- 0 296 532
- CH-A- 450 637
- FR-A- 897 381

## Description

The invention refers to a method of the type designated more closely in the definition of the species of claim 1.

In a known manner, such refractory compositions are premixed dry and subsequently mixed in a mixer with water. The flowable refractory composition is then poured into the fill space and is consolidated by vibrating or poking. In order to attain self-flowing properties and a high temperature resistance of the refractory composition, components with a granulation gap in the sieve analysis curve are used, and the upper particle size, dependent on the manufacturing process of the composition and the possibilities of homogenization when mixed at the construction site, is limited to a maximum particle diameter of 10-15 mm. With such conventional refractory compositions, no direct contact of the coarse components with one another occurs, since they, so to speak, float in the binding matrix with the fine fractions. A limited compression strength results therefrom, which can be only as high as that of the binding matrix. Since the binding matrix contains binders in addition to the mineral granular fine components, the softening under load behavior and the temperature resistance are worse than with the pure mineral raw materials.

The goal of the invention, therefore, is to propose a method of the type mentioned at the beginning, with which a higher compression strength and temperature resistance of the hardened refractory composition can be attained.

This goal is attained, in accordance with the invention, by the characterizing features of claim 1.

For the invention, it is very important that the softening under load behavior and the temperature resistance of the hardened refractory composition is essentially determined by the corresponding good characteristics of the mineral, granular components. A very good chemical resistance, a high wear resistance, an excellent temperature change resistance and, all together, very good heating characteristics, are attained, which are far higher than those of the binding matrix. The reason for this is to be found in that the granular coarse components fly one upon another because of the effect of gravity or external pressure, that is, support each other mutually, and the binding matrix fills up the cavities formed between the coarse components. Therefore, one is not dealing here with a floating arrangement of the coarse components, rather the coarse components form a self-supporting grain skeleton, in which the binding matrix only assumes a securing function.

The new method also offers application advantages. Thus, savings result in grinding and screening costs for the starting mineral substances, which as greatly wearing materials are processed mechanically only with difficulty and are to be transported in screen facilities. In wet mixing also, which, according to the new method, is still required only for the binding matrix with the fine components, there are reduced wear phenomena on the mixing apparatuses.

Advantageous development features of the invention can be deduced from the subclaims.

The material incorporation into the fill space takes place in a preferred manner in the two steps explained below:

The incorporation of the coarse components in the form of a grain bed takes place first, wherein the use of a granulation spectrum of 2-50 mm can be taken into consideration. A monodisperse grain as well as a mixture with a particle distribution within the indicated spectrum can be used. So that one can dispense with safety measures against a floating up of the coarse components of the mineral granulation, the specific weight of the coarse components must be higher than that of the binding matrix which is subsequently brought into the fill space. The coarse components are poured dry into the fill space; accordingly, they lie on one another because of the force of gravity, wherein a disturbing bridge formation or an otherwise jamming of the coarse components can be avoided by selecting extensively spherical or cubic configurations for the coarse components.

The composition of the mineral coarse and fine components, that is, the types of raw materials to be used, depends on the individual case of application. The following raw materials are primarily available for this: tabular clays, corundum, magnesite, bauxite, mullite, sillimanite, andalusite, fireproof clay, clay spinels, MgO-rich spinels, dolomite, forsterite, or olivine, wherein this list in no way makes any claim of completeness. Also regenerated materials, as they are available from wasters and the like, can be used.

Secondly, the incorporation of the binding matrix takes place in the form of a self-flowing refractory composition, which is introduced into the bed of the coarse components either in a top or in a bottom pouring. Such flowable compositions, which, as a rule, are also mixed with water, are also designated as dross in technical language. Such a dross must be able to fill up all the cavities in the bed of the coarse components, wherein at least visually, pores should no longer be recognizable between the coarse components.

The fine components in the dross have a granulation spectrum, in which the largest particle size in the maximum diameter must be smaller than the minimum diameter of the grain gaps present between the coarse components, wherein as a rule, this is below a particle size of a 2-mm diameter.

The specific gravity of the dross must be smaller than that of the coarse components so that as a result of the effect of the force of gravity, the coarse components do not float on the dross. Best of all, the mineral composition of the fine components of the dross is coordinated with the individual raw material selection and granulation for the coarse components, wherein the raw material basis is the same throughout for the fine components as well as for the coarse components. To this end, with regard to the mineral additives, recourse is had here to the same raw materials as indicated above for the use for the coarse components.

The dross also contains a binder, which makes possible a hydraulic bond, a chemical bond, or a combination bond. Furthermore, in the dross for the individual application case, other auxiliaries can be contained, such as, in particular, liquefiers, in order to ensure a good penetration of the heaped coarse components.

In total, the new method can be designated as a two-component system, which refers not only to the special mode of incorporation of the refractory. composition, but also to its consistency after the setting process, whereupon the self-supporting structure of the coarse particle components and the fine material filling up the gaps between the coarse components remain recognizable.

## Claims

1. A method for the production of monolithic, refractory linings in metallurgical vessels and furnaces, using a template, between which and the wall with the refractory lining, a fill space to be filled up is formed, in which a hydraulically and/or setting refractory composition is introduced, which contains mineral, granular coarse components and a binding matrix with mineral, granular fine components, **characterized by** the fact that independently of one another, in exchangeable sequence, the coarse components are poured into the fill space and the binding matrix, in the form of a self-flowing composition, is introduced into the fill space.

2. A method according to claim 1, **characterized by** the fact that first the coarse components are poured dry into the fill space and the binding matrix is poured therein, by filling up the cavities existing between the coarse components.

3. A method according to claim 1 or 2, **characterized by** the fact that the particle size of the coarse components is in the range of 2-50 mm in diameter.

4. A method according to claim 3, **characterized by** the fact that the bed of the coarse components consists of monodisperse grain or of components with various particle sizes.

5. A method according to claim 3 or 4, **characterized by** the fact that the coarse components have a particle shape which is spherical, cubical, and/or approximately spherical or cubical.

6. A method according to claims 1-5, **characterized by** the fact that the particle size of the fine components in the binding matrix are smaller than the minimum diameter of the cavities between the coarse components used in each case.

7. A method according to claims 1-6, **characterized by** the fact that the specific weight of the coarse components is greater than that of the binding matrix.

8. A method according to claims 2-7, **characterized by** the fact that the binding matrix is introduced into the bed of coarse components in a top or bottom pouring.

## Patentansprüche

1. Verfahren für die Herstellung von monolithischen feuerfesten Auskleidungen in metallurgischen Behältern und Öfen, indem eine Schablone verwendet wird, zwischen der und der Wandung mit der feuerfesten Auskleidung ein Füllraum gebildet wird, der aufzufüllen ist, worin eine hydraulisch und/oder chemisch erhärtende Feuerfestmasse eingeführt wird, die mineralische, grobkörnige Komponenten enthält, sowie eine bindende Grundmasse mit mineralischen, feinkörnigen Komponenten, **dadurch gekennzeichnet, dass** unabhängig voneinander in austauschbarer Reihenfolge die groben Komponenten in den Füllraum gegossen werden und die bindende Grundmasse in Form einer selbstfließfähigen Masse in den Füllraum eingeführt wird.

2. Verfahren nach Anspruch 1, **dadurch gekennzeichnet, dass** die groben Komponenten in den Füllraum gegossen werden und die bindende Grundmasse da hinein gegossen wird, indem sie die zwischen den groben Komponenten bestehenden Zwischenräume ausfüllt.

3. Verfahren nach Anspruch 1 oder 2, **dadurch gekennzeichnet, dass** der Durchmesser der Partikelgröße der groben Komponenten im Bereich von 2 bis 50 mm liegt.

4. Verfahren nach Anspruch 3, **dadurch gekennzeichnet, dass** die Schüttung der groben Komponenten aus monodispersem Korn oder aus Komponenten variierender Partikelgrößen besteht.

5. Verfahren nach Anspruch 3 oder 4, **dadurch gekennzeichnet, dass** die groben Komponenten eine Partikelform haben, die kugelförmig, kubisch und/oder näherungsweise kugelförmig oder kubisch ist.

6. Verfahren nach Anspruch 1 bis 5, **dadurch gekennzeichnet, dass** die Partikelgröße der feinen Komponenten in der bindenden Grundmasse kleiner ist als der kleinste Durchmesser der Hohlräume zwischen den groben Komponenten, die in dem jeweiligen Fall verwendet werden.

7. Verfahren nach Anspruch 1 bis 6, **dadurch gekennzeichnet, dass** das spezifische Gewicht der groben Komponenten größer ist als das der bindenden Grundmasse.

8. Verfahren nach Anspruch 2 bis 7, **dadurch gekennzeichnet, dass** die bindende Grundmasse durch fallendes oder steigendes Gießen in die Schüttung der groben Komponenten eingeführt wird .

## Revendications

1. Procédé pour la production de gamissages réfractaires monolithiques dans les fours et les récipients métallurgiques, utilisant un gabarit, formant un espace vide à remplir entre celui-ci et la paroi avec le gamissage réfractaire, dans lequel on introduit une composition de matière réfractaire figeant de façon hydraulique et/ou chimique, qui contient du minerai, des composants en gros grains et une matrice liante avec du minerai, des composants à grains fins, **caractérisé par le fait que**, indépendamment l'un de l'autre, dans un ordre quelconque, on verse les composants à gros grains dans l'espace vide et on introduit la matrice liante dans l'espace vide sous forme d'une composition automatiquement fluide.

2. Procédé selon la revendication 1, **caractérisé par le fait que** les composés à gros grains sont versés en premier à sec dans l'espace vide et la matrice liante est versée dedans, en remplissant les cavités existantes entre les composants à gros grains ;

3. Procédé selon la revendication 1 ou 2, **caractérisé par le fait que** la taille des particules des composants à gros grains est dans l'intervalle de 2-50 mm de diamètre.

4. Procédé selon la revendication 3, **caractérisé par le fait que** le lit de composants à gros grains consiste en un grain monodispersé ou en composants avec diverses tailles de particules.

5. Procédé selon la revendication 3 ou 4, **caractérisé par le fait que** les composants à gros grains ont une forme de particule qui est sphérique, cubique et/ou approximativement sphérique ou cubique.

6. Procédé selon les revendications 1-5, **caractérisé par le fait que** la taille des particules des composants fins dans la matrice liante est plus petite que le diamètre minimum des cavités entre les composants à gros grains utilisés dans chaque cas.

7. Procédé selon les revendications 1-6, **caractérisé par le fait que** le poids spécifique des composants à gros gains est plus grand que celui de la matrice liante.

8. Procédé selon les revendications 2-7, **caractérisé par le fait que** la matrice liante est introduite dans le lit des composants à gros grains en les versant du haut ou du bas.
